# EUROPÄISCHE PATENTSCHRIFT

(11) **EP 2 332 865 B1**
(45) Veröffentlichungstag und Bekanntmachung des Hinweises auf die Patenterteilung: **22.08.2012**
(21) Anmeldenummer: 10189027.5
(22) Anmeldetag: 27.10.2010
(51) Int. Cl.: B65G 47/66, B65G 57/03, B65G 59/02

(54) **Vorrichtung zum Palettieren und/oder Depalettieren**
Device for palletizing and/or depalletizing
Dispositif de palettisation et/ou de dépalettisation

(30) Priorität: 10.12.2009 DE 102009044862
(43) Veröffentlichungstag der Anmeldung: 15.06.2011
(73) Patentinhaber: Krones AG, 93073 Neutraubling (DE)
(72) Erfinder: Jaiser, Michael, 83024, Rosenheim (DE)
(74) Vertreter: Reichert, Sabine

(56) Entgegenhaltungen:
- DE-A1- 2 716 296

## Beschreibung

Die vorliegende Erfindung betrifft eine Vorrichtung zum Palettieren und/oder Depalettieren. Hierzu sind ein erster Förderer und ein zweiter Förderer vorgesehen. Der erste Förderer und der zweite Förderer sind in Transportrichtung über einen Spalt voneinander beabstandet. Der erste Förderer und der zweite Förderer bilden zusammen eine im Wesentlichen horizontale Transportebene aus. Ferner umfasst die Vorrichtung ein in vertikaler Richtung verfahrbares Hubsystem, das aus einem Hubbalken quer zur Transportrichtung und mehreren Hubzinken in Transportrichtung b<<<<esteht. Der Hubbalken ist in der abgesenkten Position des Hubsystems im Spalt zwischen dem ersten Förderer und dem zweiten Förderer angeordnet. Dabei befinden sich der Hubbalken und die mehreren Hubzinken unterhalb der horizontalen Transportebene, welche durch den ersten Förderer und den zweiten Förderer gebildet ist.

Die Offenlegungsschrift DE 2649199 A1 offenbart eine Rampe. Die Rampe weist einen Rahmen auf, der einen ersten Bereich und einen zweiten Bereich ausgebildet hat. Im ersten Bereich kann eine Palette vorgesehen sein, die mittels Güter beladen wird. Ebenso ist es denkbar, dass im ersten Bereich eine Palette angeordnet wird, von der die Güter depalettiert werden. In einem zweiten Bereich ist eine vollständig beladene Palette angeordnet. Ferner befindet sich unter dem zweiten Bereich eine Parkposition für eine leere Palette. Die leere Palette kann entweder entnommen werden oder kann in einen Beladeplatz überführt werden. Diese Ausgestaltung ist besonders vorteilhaft, damit der Belade- bzw. Entladevorgang von Paletten nicht unnötigerweise durch das zur Verfügung stellen von leeren Paletten unterbrochen wird.

Das U.S.-Patent 5,851,099 offenbart eine anpassbare Frachtplattform. Mittels der Plattform kann die Fracht in einen beliebigen Winkel und in einer beliebigen Höhe in Bezug auf einen Boden positioniert werden. Durch die Variabilität dieser Frachtplattform ist es möglich, diese Plattform mit der Rampe eines Flugzeuges auszurichten, damit die Fracht leicht von der Plattform in das Flugzeug übergeführt werden kann. Somit kann das Niveau der beiden Plattformen leicht angepasst werden.

Das Prospekt zum "Krones Pressant universal" offenbart einen Behälterabschieber. Die entsicherten Paletten werden in die Maschine befördert. Der Abschiebewagen der Vorrichtung positioniert sich über der Lage und nimmt die oberste Lage ab. Ferner kann die Vorrichtung eine Palettenhubeinheit umfassen, damit sich die zu depalettierende Palette immer auf einem konstanten Höheniveau für den Abschiebewagen befindet.

DE 2 716 296 A1 offenbart eine Vorrichtung gemäß dem Oberbegriff des Anspruchs 1.

Ein Problem der bisher aus dem Stand der Technik bekannten Vorrichtungen ist, dass Hubsysteme für das Anheben der Paletten niedriger sitzen müssen, als das Niveau der Förderer, die die zu palettierenden bzw. depalettierenden Paletten zuführen. In der Regel umfassen die Vorrichtungen zwei Zuförderer, die über einen Spalt voneinander beabstandet sind. In diesen Spalt kann das Hubsystem abgesenkt werden, damit bei der Zuführung der zu behandelnden Paletten keine Störung durch das Hubsystem auftritt. Die auf der Palette angeordneten Produkte sind bei der Zuführung bzw. der Abführung der Palette nicht mehr gesichert, so dass jegliches Kippen der Palette zu einer Beschädigung bzw. zu einer Abkippung der Produkte führen kann. Insgesamt kann somit eine Störung der gesamten Anlage herbeigeführt werden.

Der Erfindung liegt die Aufgabe zugrunde, eine Vorrichtung zum Palettieren und/oder Depalettieren zu schaffen, bei der bei der Zuführung der Paletten über Förderer keine Störung an Abständen zwischen den einzelnen Förderbändern auftritt.

Die obige Aufgabe wird durch eine Vorrichtung zum Palettieren und/oder Depalettieren gelöst, die die Merkmale des Anspruchs 1 umfasst.

Die Vorrichtung zum Palettieren und/oder Depalettieren besteht aus einem ersten Förderer und einem zweiten Förderer, wobei beide Transportrichtungen mit einem Spalt voneinander beabstandet angeordnet sind. Der erste Förderer und der zweite Förderer bilden dabei eine im Wesentlichen horizontale Transportebene aus. Ferner umfasst die Vorrichtung ein in vertikaler Richtung, im Wesentlichen senkrecht zur horizontalen Transportebene, verfahrbares Hubsystem. Das Hubsystem besteht aus einem Hubbalken quer zur Transportrichtung und mehreren Hubzinken in Transportrichtung. Der Hubbalken ist dabei in der abgesenkten Position im Spalt zwischen dem ersten Förderer und dem zweiten Förderer angeordnet. Ebenso liegen die Hubzinken unterhalb der horizontalen Transportebene.

Zwischen dem ersten Förderer und dem zweiten Förderer ist auf dem Hubbalken ein Übergangssystem quer zur Transportrichtung angeordnet. Ferner ist das Übergangssystem in der vertikalen Richtung beweglich ausgebildet, so dass bei dem abgesenkten Hubsystem das Übergangssystem in der durch den ersten Förderer und den zweiten Förderer definierten Transportebene liegt. Bei der Bewegung des Hubsystems aus der abgesenkten Position entlang der vertikalen Richtung liegt das Hubsystem unter dem oberen Niveau des Hubbalkens. Das Übergangssystem kann aus mehreren Übergangsblechen oder aus mindestens einer Rolle, deren Drehachse senkrecht zu der Transportrichtung liegt, oder aus mehreren Kugeln bestehen. Da der Spalt zwischen dem ersten Förderer und dem zweiten Förderer derart groß ausgebildet sein muss, dass er den Hubbalken des Hubsystems aufnehmen kann, ist es erforderlich, den Übergang für die zu transportierenden Paletten von dem ersten Förderer auf den zweiten Förderer möglichst ohne Hindernisse auszugestalten. Dies ist nur möglich, in dem man auf dem Hubbalken das entsprechende Übergangssystem anordnet.

Das Übergangssystem ist mit einer Führungseinheit verbunden, die für eine Bewegung des Übergangssystems in vertikaler Richtung sorgt. Die Führungseinheit selbst ist im Hubbalken des Hubsystems angeordnet. Für den Fall, dass die Paletten in vertikaler Richtung mit dem Hubsystem angeordnet werden, liegt zumindest ein Teil der Palette ebenfalls auf dem Hubbalken auf. Um nun eine ebene Auflage der Palette auf dem Hubsystem zu gewährleisten, ist es erforderlich, dass während des Anhebens der Palette mit dem Hubsystem das Übergangssystem nicht mehr mit der Palette zusammenwirkt. Würde das Übergangssystem weiterhin mit der Palette zusammenwirken, würde sich eine schräge Auflage der Palette auf dem Hubsystem ergeben. Somit besteht die Gefahr, dass die lose auf der Palette angeordneten Gegenstände herunterfallen können und somit zu einer Störung des Systems führen.

Es ist ein feststehendes Element vorgesehen, mit dem die Führungseinheit derart zusammenwirkt, dass in der abgesenkten Position des Hubsystems das Übergangssystem mittels des feststehenden Elements über das obere Niveau des Hubbalkens verbringbar ist.

Bei der Bewegung des Hubsystems aus der abgesenkten Position heraus in vertikaler Richtung, gelangt das Übergangssystem mittels Schwerkraft und/oder einer Federkraft unter das obere Niveau des Hubbalkens. Somit ist gewährleistet, dass die auf dem Hubsystem befindliche Palette mit dem Übergangssystem außer Eingriff ist. Das Übergangssystem ist dabei derart im Hubbalken des Hubsystems angeordnet, dass bei der Bewegung des Hubsystems aus der abgesenkten Position in vertikaler Richtung das Übergangssystem im Hubbalken verbleibt.

Das Übergangssystem besteht, wie bereits erwähnt, aus der Gleiteinheit der Führungseinheit. Die Gleiteinheit kann aus mehreren Rollen, Balken, Kugeln, Übergangsblechen oder Ähnlichem bestehen. Die Gleiteinheit selbst ist an der Führungseinheit befestigt. Die Führungseinheit ist dabei derart im Hubbalken des Hubsystems angeordnet, dass die Führungseinheit eine vertikale Bewegung zulässt. Ebenso ist die Führungseinheit im Hubbalken des Hubsystems angeordnet. Der Spalt zwischen dem ersten Förderer und dem zweiten Förderer ist konstruktionsbedingt derart breit ausgestaltet, dass der Spalt den Hubbalken des Hubsystems aufnehmen kann, der sich quer zur Förderrichtung erstreckt. Der Hubbalken muss unter das Förderniveau bzw. der Förderebene fahren, damit der Transport der Palette vom ersten Förderer zum zweiten Förderer hin nicht behindert ist. Am Hubbalken sind Hubzinken oder Ähnliches angebracht, die sich parallel zur Förderrichtung erstrecken. Auch die Hubzinken müssen sich während des Transports des Produkts unterhalb des Förderniveaus bzw. der Förderebene des ersten Förderers und des zweiten Förderers befinden. Das anzuhebende Produkt (Palette) wird durch den ersten Förderer und den zweiten Förderer über den Hubbalken mit dem Hubzinken transportiert und bleibt über diesen stehen. In dem Spalt zwischen dem ersten Förderer und dem zweiten Förderer ist das Übergangssystem angeordnet, um somit ein Abkippen oder hängen bleiben des Produkts bzw. der Palette zu verhindern. Das Übergangssystem ist derart ausgebildet, dass es einen Niveauunterschied zwischen der Oberkante des Hubbalkens und der Förderebene ausgleicht. Das Produkt bzw. die Palette wird bei dem Transport durch den ersten Förderer und dem zweiten Förderer über das Übergangssystem ohne Niveauunterschied geschoben. Das Übergangssystem stützt sich auf einem feststehenden Element ab und kann in seiner Höhe einstellbar ausgebildet sein.

Das Übergangssystem ist mit einer Führungseinheit versehen, die zusammen mit dem Übergangssystem derart im Hubbalken angeordnet ist, dass sich das Übergangssystem beim Hebevorgang im Hubbalken versenkt. Dadurch, dass sich das Übergangssystem in Verbindung mit der Führungseinheit auf dem feststehenden Element abstützt, welches außerhalb des Hubbalkens des Hubsystems vorgesehen ist, bleibt das Produkt bzw. die Palette ohne Erschütterung auf dem Hubsystem während des Transports bzw. der Bewegung in vertikaler Richtung stehen. Das Übergangssystem wird im Hubbalken versenkt bzw. versenkt sich selbst durch Schwerkraft oder federunterstützt. Das Übergangssystem bleibt im Hubbalken, während dieser zusammen mit dem Hubzinken das Produkt bzw. die Palette in vertikaler Richtung anhebt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
- Figur 1: zeigt eine Seitenansicht der erfindungsgemäßen Vorrichtung, die einen störungsfreien Transport eines Produkts bzw. einer Palette innerhalb ei- ner Transportebene zwischen zwei Förderern ermöglicht.
- Figur 2: zeigt die Situation des Produkts bzw. der Palette vor dem Anheben der Palette bzw. des Produkts in vertikaler Richtung durch das Hubsystem.
- Figur 3: zeigt die Situation, bei der das Produkt bzw. die Palette durch das Hub- system in vertikaler Richtung angehoben worden ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Ausführungsbeispiele dar, wie die erfindungsgemäße Vorrichtung ausgestaltet sein kann und stellen somit keine abschließende Begrenzung dar.

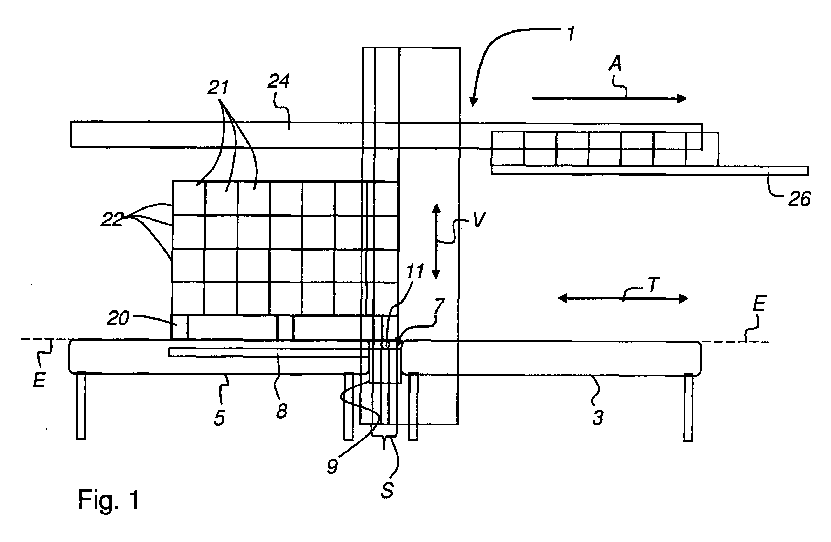

**Figur 1** zeigt eine schematische Seitenansicht der erfindungsgemäßen Vorrichtung 1. Die Vorrichtung 1 besteht aus einem ersten Förderer 3 und einem zweiten Förderer 5, die zueinander durch einen Spalt S beabstandet angeordnet sind. Die Vorrichtung 1 umfasst ferner ein Hubssystem 7, das in vertikaler Richtung V bewegbar ausgebildet ist und somit eine Palette 20 (bzw. Produkt) anheben kann. Die Palette 20 trägt eine Vielzahl von Gegenständen 21, die in mehreren Lagen 22 auf der Palette 20 angeordnet sind. Die Vorrichtung 1 umfasst ferner eine Abnahmeeinheit 24, die die oberste Lage 22 aus Gegenständen 21 abnimmt und an einen Abförderer 26 übergibt, der die Gegenstände 21 in Transportrichtung A zur weiteren Bearbeitung abtransportiert. Der erste Förderer 3 und der zweite Förderer 5 bilden eine Transportebene E aus. Die Produkte bzw. die Paletten 20 werden mittels des ersten Förderers 3 in Transportrichtung T zugeführt. Um einen reibungslosen und erschütterungsfreien Transport der Paletten 20 vom ersten Förderer 3 auf den zweiten Förderer 5 zu gewährleisten, ist in dem Spalt S zwischen dem ersten Förderer 3 und dem zweiten Förderer 5 ein Übergangssystem 11 vorgesehen. Das Übergangssystem 11 ist auf dem Hubbalken 9 des Hubsystems 7 angeordnet. Ferner sind dem Hubbalken 9 mehrere Hubzinken 8 zugeordnet, die für das Anheben der Palette 20 in vertikaler Richtung V verwendet werden.

Bei der in Figur 1 gezeigten schematischen Ansicht der erfindungsgemäßen Vorrichtung 1 befindet sich das Hubsystem 7 in der abgesenkten Position. Sowohl der Hubbalken 9 als auch die Hubzinken 8 des Hubsystems 7 liegen dabei unterhalb der Transportebene E, welche durch den ersten Förderer 3 und den zweiten Förderer 5 definiert wird. Das auf dem Hubbalken 9 befindliche Übergangssystem 11 liegt dadurch in der Transportebene E des ersten Förderers 3 und des zweiten Förderers 5. Durch diese Anordnung des Übergangssystems 11 ist ein reibungsloser, erschütterungsfreier und störungsfreier Transport der Palette 20 vom ersten Förderer 3 auf den zweiten Förderer 5 möglich. Es ist anzumerken, dass im Falle der Depalettierung der auf der Palette 20 angeordneten Gegenstände 21 diese nicht mehr gesichert auf der Palette 20 angeordnet sind. Jegliche Erschütterungen oder Schieflagen der zu transportierenden Palette 20 können somit zu einer Störung der Vorrichtung 1 führen. Hinzu kommt, dass Gegenstände, welche von der Palette 20 herunterfallen, beschädigt werden.

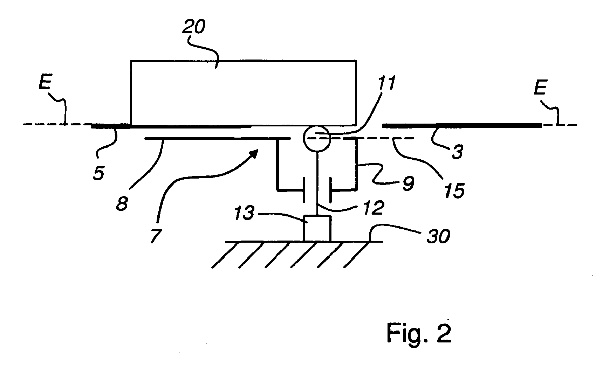

**Figur 2** zeigt eine schematische Seitenansicht der erfindungsgemäßen Vorrichtung 1, bei der das Produkt bzw. die Palette 20 bereits vom ersten Förderer 3 auf den zweiten Förderer 5 überführt worden ist. Wie bereits in der Beschreibung zu Figur 1 erwähnt, liegt die Palette 20 auf dem Übergangssystem 11 auf, welches auf dem Hubbalken 9 des Hubsystems 7 angeordnet ist. Das Hubsystem 7 befindet sich unterhalb der durch den ersten Förderer 3 und den zweiten Förderer 5 definierten Transportebene E. Das Übergangssystem 11 ist mit einer Führungseinheit 12 verbunden, die mit einem feststehenden Element 13 zusammenwirkt, welches auf dem Boden 30 im Aufstellungsbereich der Vorrichtung 1 vorgesehen ist. Das Führungselement 12 verläuft im Inneren des Hubbalkens 9 und stützt sich somit auf dem feststehenden Element 13 ab. Dadurch kann die Palette 20 auch zum Teil auf dem Übergangssystem 11 ruhen. Das Übergangssystem 11 selbst kann in verschiedenen Ausführungsformen ausgebildet sein. Das Übergangssystem 11 kann z. B. aus Übergangsflächen gebildet sein. Das einzige Erfordernis an die Übergangsfläche ist, dass diese nicht den Transport der Palette 20 in Transportrichtung vom ersten Förderer 3 auf den zweiten Förderer 5 behindert. Eine weitere Möglichkeit ist, dass mehrere Transportrollen mit ihrer Drehachse (nicht dargestellt) quer zur Transportrichtung T als Übergangssystem 11 vorgesehen sind. Das Übergangssystem 11 kann ebenfalls in Form von mehreren Kugeln ausgebildet sein. Ebenso ist es denkbar, dass das Übergangssystem 11 als eine Kombination aus Kugeln und Rollen ausgebildet ist. Ein wesentliches Erfordernis an das Übergangssystem 11 ist, dass dieses nicht den Transport der Palette 20 von dem ersten Förderer 3 auf den zweiten Förderer 5 behindert. Hierzu ist es lediglich erforderlich, dass das Übergangssystem 11 die Reibung zwischen der Palette 20 und dem Übergangssystem 11 nicht erhöht. Das Übergangssystem 11 überragt in dieser Stellung das obere Niveau 15 des Hubbalkens 9. Der Hubbalken 9 behindert nicht den Transport der Palette 20 vom ersten Förderer 3 auf den zweiten Förderer 5, da das obere Niveau 15 des Hubbalkens 9 unterhalb der durch den ersten Förderer 3 auf den zweiten Förderer 5 gebildeten Transportebene E liegt.

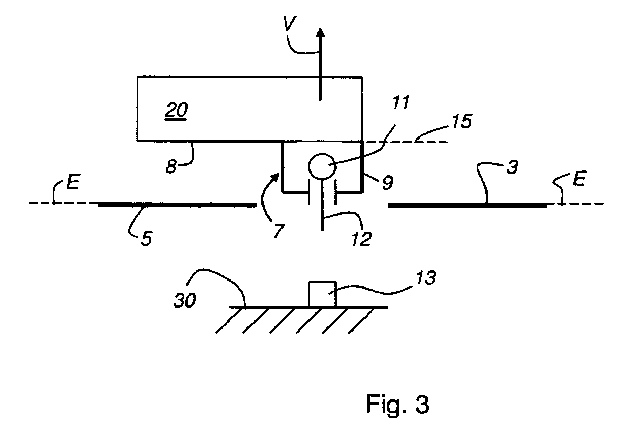

**Figur 3** zeigt die Situation, bei der das Hubsystem 7 die Palette 20 erfasst hat und diese in vertikaler Richtung V von der Transportebene E abgehoben hat. Die Palette 20 liegt dabei auf dem Hubbalken 9 und dem Hubzinken 8 des Hubsystems 7 auf. Durch die Bewegung des Hubsystems 7 in der vertikalen Richtung V ist die Führungseinheit 12 nicht mehr in Kontakt mit der feststehenden Einheit 13 am Boden 30 des Aufstellungsbereichs der Vorrichtung 1. Da das Übergangssystem 11 zusammen mit der Führungseinheit 12 im Hubbalken 9 beweglich ausgebildet ist, fängt diese somit das Übergangssystem 11 unterhalb eines oberen Niveaus 15 des Hubbalkens 9 ab. Nur dadurch liegt die zu transportierende Palette 20 vollständig auf dem Hubbalken 9 und dem Hubzinken 8 auf. Im Gegensatz zur Darstellung in Figur 2 überragt das obere Niveau 15 des Hubbalkens 9 das Übergangssystem 11, so dass die Palette 20 in dieser Situation ebenso auf dem Übergangssystem 11 aufliegt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Vorrichtung (1) zum Palettieren und/oder Depalettieren mit
einem ersten Förderer (3) und einem zweiten Förderer (5), die in Transportrichtung (T) mit einem Spalt (S) voneinander beabstandet sind und eine im wesenttichen horizontable Transportebene (E) ausbilden,
einem in einer vertikalen Richtung (V) verfahrbarem Hubsystem (7) **dadurch gekennzeichnet, dass** Aubsystem das aus einem Hubbalken (9) quer zurTransportrichtung (T) und einem oder mehreren Hubzinken (8) in Transportrichtung (T) aufgebaut ist, wobei der Hubbalken (9) in einer abgesenkten Position des Hubsystems (7) im Spalt (S) zwischen dem ersten Förderer (3) und dem zweiten Förderer (5) angeordnet ist und wobei der Hubbalken (9) und der eine bzw. die mehreren Hubzinken (8) untertlalb der horizontalen Transportebene (E) liegen, wobei
ein Übergangssystem (11) am Hubbalken (9) quer zur-Transportrichtung (T) angeordnet ist und in der vertikalen Richtung (V) beweglich ausgebildet ist, wobei bei dem Hubsystem (7) in der abgesenkten Position das Übergangssystem (11) in der durch den ersten Förderer (3) und den zweien Förderer (5) definierten Transportebene (E) liegt, und wobei
das Übergangssystem (11) in der abgesenken position ein oberes Niveau (15) des Hubbalkens (9) überragt, und wobei
bei einer Bewegung des Hubsystems (7) aus der abgesenkten Position in der vertikalen Richtung (V) das Überganggssystem (11) unter oder gleich dem oberen Niveau (15) des Hubbalkens (9) liegt.

2. Vorrichtung (1) nach Anspruch 1, wobei das Übergangssystem (11) aus mehreren Übergangsblechen, öder aus mindestens einer Rolle, deren Drehachsen senkrecht zur Transportrichtung (T) liegt, oder aus mehreren Kugeln besteht.

3. Vorrichtung (1) nach Anspruch 1 oder 2, wobei das Übergangssystem (11) mit einer Führungseinheit (12) verbunden ist, die für eine Bewegung des Übergangssystems (11) in vertikaler Füchtung (V) sorgt, wobei die Führungseinheit (12) im Hubbalken (9) des Hubsystems (7) vorgesehen ist.

4. Vorrichtung (1) nach Ansprüch 3 wobei ein feststhendes Element (13) vorgesehen ist, mit dem die Führungseinheit (12) derart zusammenwirkt, dass in der abgesenkten Position des Hubsystems (7) das Übergangssystem (11) mittels des feststehenden Elements (13) über das obere Niveau des Hubbalkens (9) verbringbar ist.

5. Vorrichtung (1) nah Anspruch 4, wobei bei der Bewegung des Hubsystems (7) aus der abgesenkten Position in der vertikalen Richtung (V) das Übergangssystem (11) mittels Schwerkraft unter oder auf das obere Niveau des Hubbalkens (9) gelangt.

6. Vorrichtung (1) nach Anspruch 4, wobei bei der Bewegung des Hubsystems (7) aus der abgesenkten Postition in der vertikalen Richtung (V) das Übergangssystem (11) mittels Federkraft unter oder auf das obere Niveau des Hubbalkens (9) gelangt.

7. Vorrichtung (1) nach den Ansprüchen 1 bis 6, wobei das Übergangssystem (11) bei der Bewegung des Subsystems (7) aus der abgesenkten Postition in der vertikalen Richtung (V) im Hubbalken (9) des Hubsystems (7) verbleibt.

## Claims

1. Apparatus (1) for palletizing and/or depalettizing with
a first conveyor (3) and a second conveyor (5), which are spaced from one another in a transport direction (T) with a gap (S) and which form a substantially horizontal transport plane (E),
a lifting system (7), which is moveable in the vertical direction (V),
**characterized in that**
the lifting system is formed of a lifting beam (9), which is disposed transversely with respect to the transport direction (T) and one or a plurality of lifting tines (8), which is/are disposed in the transport direction (T), wherein the lifting beam (9) is arranged in a lowered position of the lifting system (7) in the gap (S) between the first conveyor (3) and the second conveyor (5) and wherein the lifting beam (9) and the one or the plurality of lifting tines (8) lie beneath the horizontal transport plane (E), wherein
a transition system (11) is arranged at the lifting beam (9) transversely with respect to the transport direction (T) and is formed in such a manner as to be moveable in the vertical direction (V), wherein
when the lifting system (7) is in the lowered position, the transition system lies (11) in the transport plane (E) defined by means of the first conveyor (3) and the second conveyor (5), and wherein
the transition system (11) in the lowered position surmounts an upper level (15) of the lifting beam (9), and wherein
in the case of a movement of the lifting system (7) from the lowered position in the vertical direction (V), the transition system (11) lies below or levels with the upper level (15) of the lifting beam (9).

2. Apparatus (1) according to claim 1, wherein the transition system (11) consists of a plurality of transition sheets or at least one roller, whose rotational axis lies perpendicular to the transport direction (T), or a plurality of balls.

3. Apparatus (1) according to claim 1 or 2, wherein the transition system (11) is conjoined with a guiding unit (12), which provides for a movement of the transition system (11) in the vertical direction (V), wherein the guiding unit (12) is provided in the lifting beam (9) of the lifting system (7).

4. Apparatus (1) according to claim 3, wherein a fixed element (13) is provided, with which the guiding unit (12) cooperates in such a way that, in the lowered position of the lifting system (7), the transition system (11) can be passed over the upper level of the lifting beam (9) by means of the fixed element (13).

5. Apparatus (1) according to claim 4, wherein in the case of the movement of the lifting system (7) from the lowered position in the vertical direction (V), the transition system (11) reaches below or to the upper level of the lifting beam (9) by means of gravity.

6. Apparatus (1) according to claim 4, wherein in the case of the movement of the lifting system (7) from the lowered position in the vertical direction (V) the transition system (11) reaches below or to the upper level of the lifting beam (9) by means of elastic force.

7. Apparatus (1) according to claims 1 to 6, wherein the transition system (11), in the case of the movement of the lifting system (7) from the lowered position in the vertical direction (V), remains in the lifting beam (9) of the lifting system (7).

## Revendications

1. Dispositif (1) pour la palettisation et/ou la dépalettisation avec
un premier convoyeur (3) et un deuxième convoyeur (5) qui sont espacés l'un de l'autre dans le sens de transport (T) par un interstice (S) et forment un plan de transport (E) essentiellement horizontal,
un système de levage (7) pouvant être déplacé dans un sens vertical (V),
**caractérisé en ce que**
le système de levage est formé d'une poutre de levage (9) située transversalement par rapport au sens de transport (T) et une ou plusieurs dents de levage (8) dans le sens de transport (T), étant donné que la poutre de levage (9) est disposée à une position abaissée du système de levage (7) dans l'interstice (S) entre le premier convoyeur (3) et le deuxième convoyeur (5), et étant donné que la poutre de levage (9) et la ou la pluralité de dents de levage (8) sont situées en dessous du plan de transport horizontal (E), étant donné que
un système de transition (11) est disposé à la poutre de levage (9) transversalement par rapport au sens de transport (T) et est formé de manière à être mobile dans le sens vertical (V), étant donné que lorsque le système de levage (7) est à la position abaissée, le système de transition (11) est situé dans le plan de transport (E) défini par le premier convoyeur (3) et le deuxième convoyeur (5), et étant donné que
le système de transition (11), lorsqu'il est à la position abaissée, déborde un niveau supérieur (15) de la poutre de levage (9), et étant donné que lors d'un mouvement du système de levage (7) à partir de la position abaissée dans le sens vertical (V), le système de transition (11) est situé en dessous du ou au même niveau que le niveau supérieur (15) de la poutre de levage (9).

2. Dispositif (1) selon la revendication 1, étant donné que le système de transition (11) se compose d'une pluralité de tôles de transition, ou d'au moins un rouleau dont les axes de rotation sont perpendiculaires au sens de transport (T), ou d'une pluralité de billes.

3. Dispositif (1) selon la revendication 1 ou 2, étant donné que le système de transition (11) est relié à une unité de guidage (12) qui assure un mouvement du système de transition (11) dans le sens vertical (V), étant donné que l'unité de guidage (12) est prévue dans la poutre de levage (9) du système de levage (7).

4. Dispositif (1) selon la revendication 3, étant donné qu'est prévu un élément fixe (13) avec lequel coopère l'unité de guidage (12) de manière à ce que, à la position abaissée du système de levage (7), le système de transition (11) puisse être amené au moyen de l'élément fixe (13) au-dessus du niveau supérieur de la poutre de levage (9).

5. Dispositif (1) selon la revendication 4, étant donné que, lors du mouvement du système de levage (7) à partir de la position abaissée dans le sens vertical (V), le système de transition (11) arrive sous l'effet de la gravité en dessous du ou au même niveau que le niveau supérieur de la poutre de levage (9).

6. Dispositif (1) selon la revendication 4, étant donné que, lors du mouvement du système de levage (7) à partir de la position abaissée dans le sens vertical (V), le système de transition (11) arrive sous l'effet d'une force élastique en dessous du ou au même niveau que le niveau supérieur de la poutre de levage (9).

7. Dispositif (1) selon les revendications 1 à 6, étant donné que le système de transition (11) reste dans la poutre de levage (9) du système de levage (7) lors du mouvement effectué par le système de levage (7) à partir de la position abaissée dans le sens vertical (V).
